# EUROPÄISCHE PATENTSCHRIFT

(11) **EP 0 483 680 B1**
(45) Veröffentlichungstag und Bekanntmachung des Hinweises auf die Patenterteilung: **23.08.1995**
(21) Anmeldenummer: 91118222.8
(22) Anmeldetag: 25.10.1991
(51) Int. Cl.: B60T 17/22

(54) **Niveauschalteranordnung**
Level switch arrangement
Agencement d'un commutateur de niveau

(30) Priorität: 02.11.1990 DE 4034815
(43) Veröffentlichungstag der Anmeldung: 06.05.1992
(73) Patentinhaber: ROBERT BOSCH GMBH, 70442 Stuttgart (DE)
(72) Erfinder: Dzierzawa, Günter, Ing., W-7050 Waiblingen (DE); Schäfer, Jochen, Ing., W-7120 Bietigheim-Bissingen (DE)

(56) Entgegenhaltungen:
- EP-A- 0 111 672
- DE-A- 3 218 424
- DE-A- 3 430 096
- GB-A- 2 206 167

## Beschreibung

### Stand der Technik

Bei Bremssystemen, bestimmten Antiblockiersystemen oder Antriebsschlupfregelsystemen wird der benötigte Bremsdruck mittels einer Pumpe erzeugt, die Druckmittel aus einem Bremsflüssigkeitsbehälter entnimmt.

Bei diesen Systemen, siehe z.B. DE-A-3 430 096, erfolgt eine Systemabschaltung, wenn das Niveau des Bremsflüssigkeitsbehälters über eine vorgegebene Zeitspanne unterhalb eines bestimmten Pegels liegt. Diese Sensierung erfolgt oft durch Schwimmschalter, die bei Unterschreiten des eingestellten Levels ansprechen. Nachteil dieser Schwimmschalter ist, daß bei niedrigen, aber ausreichendem Flüssigkeitsniveau bei extremer Kurvenfahrt dieser Schalter ansprechen kann. Die verwendete Filterzeit reicht nicht immer aus, um dies als "Störung" herauszufiltern.

### Vorteile der Erfindung

Mit der erfindungsgemäßen Maßnahme wird verhindert, daß es zu einer dauerhaften Abschaltung kommt, wenn der Pegel nur durch den Einfluß einer scharf gefahrenen Kurve auftritt.

Da das "fehlerhafte" Ansprechen nur bei extremer Kurvenfahrt auftritt, wird die Filterung des Niveauschaltersignals abhängig von einer Kurvenfahrt unterschiedlich gemacht, bzw. die Abschaltung wird nur temporär vorgenommen.

Die Kurvenfahrt kann durch
- ein Geschwindigkeitsvergleich der Räder, (vorteilhafterweise der nichtangetriebenen Räder)
- durch Querbeschleunigungssensoren
- oder andere Sensoren (z.B. Lenkwinkelgeber), die eine Aussage über die momentane Kurvenfahrt oder Querbeschleunigung machen
erkannt werden.

Wird in Verbindung mit dem Ansprechen des Niveauschalters eine Kurvenfahrt sensiert, dann wird das System z.B. nur temporär abgeschaltet. Innerhalb einer Regelung wird nur der betreffende Reglerteil passiv geschaltet.

Ist nach Ende der Kurve das Niveau wieder ordnungsgemäß, wird das System evtl. nach einer weiteren Filterzeit, wieder zugeschaltet. Die Verfügbarkeit der Systeme läßt sich dadurch erhöhen.

Die vorgeschlagene Lösung stellt eine einfache Maßnahme (meist nur Softwareaufwand) dar, läßt aber eine höhere Verfügbarkeit von Systemen zu, die von dem "unsicheren" Niveauschalter abhängen.

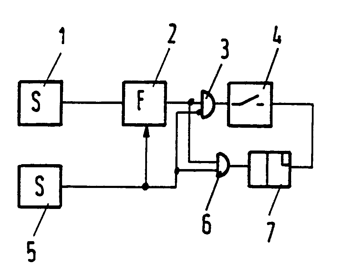

In der Zeichnung ist ein Ausführungsbeispiel der Erfindung dargestellt. Mit 1 ist ein Niveauschalter bezeichnet, dessen Ausgangssignal einer Filteranordnung 2 zugeführt wird. Dieses gibt ein Signal ab, wenn der Niveauschalter eine vorgegebene kurze Zeit von z.B. 0,5 sec angesprochen hat. Dieses Signal betätigt über ein Und-Gatter 3 einen Schalter 4, der z.B. ein ASR, zu dem der zu überwachende Flüssigkeitsbehälter gehört, abschaltet.

Mit 5 ist ein Querbeschleunigungsschalter bezeichnet, der ab einer bestimmten Querbeschleunigung ein Signal abgibt und entweder die Zeitkonstante der Filteranordnung 5 auf z.B. 10 sec schaltet, oder das Und-Gatter 3 sperrt und ein Und-Gatter 6 durchlässig macht, sodaß ein monostabiles Glied 7 anspricht und seinerseits den Schalter 4 betätigt. Nach einer vorgegebenen Zeit nach Ende des Kurvensignals fällt das monostabile Glied 7 ab und schaltet damit den abgeschalteten Regler wieder ein.

## Patentansprüche

1. Niveauschalteranordnung für einen in einem Fahrzeug mitgeführten Flüssigkeitsbehälter, bei der an den Niveauschalter eine Filteranordnung angeschaltet ist, die bei Ansprechen des Niveauschalters über eine vorgegebene Filterzeit hinaus ein Abschaltsignal erzeugt, dadurch gekennzeichnet, daß eine Einrichtung zum Erkennen einer Kurvenfahrt vorgesehen ist und daß bei Vorliegen einer Kurvenfahrt die Schaltung auf eine längere Filterzeit umgeschaltet wird oder nur eine Abschaltung für eine vorgegebene Zeit vorgenommen wird.

## Claims

1. Level-switch arrangement for a fluid tank carried in a vehicle, in which the level switch has connected to it a filter arrangement which produces a switch-off signal if the level switch responds for a time longer than a predetermined time, characterized in that a device for detecting cornering is provided and in that, if cornering is present, the circuit is switched over to a longer filtering time or the system is switched off only for a predetermined time.

## Revendications

1. Dispositif de commutation de niveau pour un réservoir contenant du liquide embarqué dans un véhicule, et dont le commutateur de niveau est relié à un dispositif à filtre qui, lorsque le commutateur de niveau est sollicité, crée pendant un temps de filtrage prédétermine un signal de coupure, caractérisé par une installation pour détecter un trajet en courbe et qui, lorsqu'on se trouve dans un trajet en courbe, commute le circuit sur un temps de filtrage plus long ou n'effectue une coupure que pour un temps prédéterminé.
